# EUROPEAN PATENT SPECIFICATION

(11) **EP 2 703 503 B1**
(45) Date of publication and mention of the grant of the patent: **28.02.2018**
(21) Application number: 13181712.4
(22) Date of filing: 26.08.2013
(51) Int. Cl.: C22B 3/44, C22B 3/00

(54) **Method of precipitation of iron from leach solutions**
Verfahren zur Ausscheidung vom Eisen aus Laugenlösungen
Procédé de précipitation du fer à partir de solutions de lixiviation

(30) Priority: 04.09.2012 EP 12182923; 04.09.2012 EP 12182922; 25.01.2013 EP 13152731
(43) Date of publication of application: 05.03.2014
(73) Proprietor: Canbekte, Hüsnü Sinan, 34430 Istanbul (TR)
(72) Inventor: Canbekte, Zekeriya, 34430 Istanbul (TR)
(74) Representative: Goddar, Heinz J.

(56) References cited:
- WO-A1-2007/079532
- WO-A1-2009/114903
- WO-A1-2009/155651
- US-A1- 2008 271 571

## Description

### Technical field of the invention

The present invention relates to the precipitation of iron with lime and/or limestone from leach solutions.

### Background of the invention

Leaching of metal bearing materials with acids is widely applied in the industry. Iron removal from leach solutions is important for the recovery of metals and for process economics. Iron is normally removed from the solution as jarosite, goethite or hematite but can also be precipitated out of the leach solution as hydroxide by precipitation with a suitable pH adjuster such as lime, limestone, magnesium hydroxide, caustic or ammonia etc. US 2008/271571 A1 discloses an example of such method of iron precipitation. Main problems with this method arose from the fact that iron hydroxide precipitated in this way presents difficulties in filtering so that an unacceptable amount of metallic values is lost in the filter cake.

### Summary of the invention

The object of the invention is to provide a method for efficient removal of iron as iron hydroxide/oxide from leach solutions containing other metals resulting from leaching of metal bearing materials with acids.

This object is achieved by means of the method according to claim 1. Advantageous further embodiments of the invention are defined in the dependent claims.

During the work leading to the present invention it was found possible to precipitate iron under atmospheric conditions from a sulphate leach solution comprising, inter alia and without limitation, nickel and cobalt sulphates.

The advantages with the method according to the invention include that the method can be performed at atmospheric pressure and at temperatures from ambient to boiling temperatures and that no gases are emitted. Another important advantage is, by prevention of gel formation of the iron precipitate, that solid / liquid separation becomes much easier and loss of valuable metals is minimized.

Thus, the present invention relates to a process for efficient precipitation of iron from leach solutions.

The characterizing features of the invention will be evident from the following description and the appended claims.

### Dietailed description of the invention

The term 'metal' used herein and in the appended claims encompasses nickel, cobalt and any other metals that are normally soluble in acids.

Method step a) through I) described hereinafter may be combined in suitable fashion to yield a method as defined in the appended claims or advantageous further developments thereof.
a) An emulsion of lime and/or limestone is prepared by mixing of lime and/or limestone with water and stirring the emulsion for a sufficient period of time. This emulsion will have a pH of over 10.
b) The leach solution with a pH as low as 0,1 obtained by leaching of metal bearing materials with acid is then added into this lime/limestone emulsion in order to bring the final pH of the leach solution to between 2.8-3.0. Other alkalines could be used, too. With the resulting increase in pH, iron precipitates out of the solution as oxide/hydroxite. This shock pH adjustment also eliminates gel type formation of iron oxide/hydroxide and facilitates easy filtration.
c) This 'shock rise in pH' achieved with the procedure reverse to the normal application as explained in (b) above helps eliminate gel formation of iron oxide/hydroxide and thus makes filtering much easier. This also helps reduce metallic values contained in the iron oxide/hydroxide precipitate.
d) The emulsion is stirred during a suitable time, preferably for about 4 hours.
e) Following solid/liquid separation by thickening, the pH of the overflow solution is adjusted to around 4,5, preferably with limestone emulsion.
f) Then, with the addition of dilute hydrogen peroxide, the pH of this solution is adjusted to between 3,25-3,50 while stirring and stabilized. Now, at this stage, the pH of this solution is brought back to around 4,5 with addition of further limestone (preferably) or other alkaline. By this way, all of iron and aluminium in the solution completely precipitates. Iron and aluminium concentrations can thus be lowered to below 1 ppm.
g) After solid/liquid separation, the solution containing most of the metallic values such as nickel, cobalt, zinc, copper etc except iron and aluminium is treated further to recover other metallic values using any one of known methods such as precipitation by pH regulation, by sulphidation or by solvent extraction, electrolysis etc.
h) The underflow from the thickener, in the cases of leach solutions other than sulphates (such as nitrate or chloride leach solutions) contains mainly iron as oxide/hydroxite.
i) The underflow from the thickener, in the case of sulphate solutions contains mainly iron as oxide/hydroxite and gypsum.
j) The thickener underflow is filtered and the filter cake is washed thoroughly with water to minimize any soluble metallic values remaining in the cake.
k) The filter cake which is now nearly free of other metallic values such as nickel, cobalt, zinc, copper etc, is discarded.
l) The filtrate and the wash waters containing metallic values are either used in the process where required or sent to metal recovery.

Practically, the method is preferably performed in vessels made from stainless steel or mild steel or concrete tanks which could be lined with proper protective lining. The invention will now be further explained in the following example. This example is only intended to illustrate the invention and should in no way be considered to limit the scope of the invention.

### Example

1. A leach solution obtained from leaching of a nickel laterite ore was used. The pH of the process leach solution (PLS) was 0,2 and contained 82.000 ppm Fe, 4500 ppm Ni.
2. 400 grams of limestone was placed in a beaker and the volume was made up to 1 liter with water. The emulsion was stirred for four hours and the pH of this emulsion reached over 10. The amount of limestone was adjusted in such a way that for 1 gm of iron in the PLS, between 2-4 gm of CaCO3 was used.
3. In order to avoid gel formation of iron oxide/hydroxite, the leach solution from laterite leaching was then added into this limestone emulsion prepared as above until a pH of 2,8-3,0 was reached, while stirring at atmospheric conditions. Normally, no additional pressure is required. Then this mixture emulsion was stirred for up to four hours. This 'shock pH adjustment' eliminates gel formation opportunity.
4. At this pH, iron was converted to oxide/hydroxide and was separated as precipitate by solid /liquid separation from the solution. Fe concentration in thickener overflow dropped to 600 ppm indicating more than 95 % removal of iron from the leach solution. The thickener overflow contained 2200 ppm Ni indicating over 95 % recovery of nickel into the filtrate.
5. To this thickener overflow solution, initially limestone emulsion was added to bring the pH to around 4,5 and then the pH was lowered down to a constant value between 3,25-3,5 with dilute hydrogen peroxide, and the solution was stirred. Again with a fresh addition of limestone emulsion, the pH of this solution was increased back to around 4,5. With this procedure, all of any remaining dissolved iron and aluminium precipitated out of the solution.
6. Following solid/liquid separation, the solution contained less than 1 ppm iron and aluminium.
7. The thickener underflow was also filtered easily and precipitate was washed with water to remove any metallic values. This iron oxide/hydroxite/gypsum cake was found to contain less than 0,02% confirming a nickel loss, in the iron precipitate, of less than 5%.

## Claims

1. A method of removing iron from leach solutions, obtained by leaching of metal bearing materials with acids, in the form of hydroxide and/or oxide by precipitation, wherein the pH of the iron bearing leach solution is raised to between 2,8- 3,0 by adding of the iron bearing solution, preferably with pH 0,1, to an emulsion of lime and/or limestone with a pH of over 10, which emulsion preferably is prepared separately.

2. A method according to the claim 1, wherein the pH of the iron bearing leach solution is ≥ 0,1, preferably essentially as low as 0,1, more preferably 0,1.

3. A method according to claim 1 or 2, wherein iron and aluminium remaining in the solution is completely precipitated out of the solution by initially increasing the solution pH to around 4,5 with lime and/or limestone and then lowering the pH to between 3,25-3,5 with dilute hydrogen peroxide and then increasing the pH back to around 4,5 with lime and/or limestone.

4. A method according to any of claims 1 to 3, performed at essentially atmospheric pressure.

5. A method according to any of claims 1 to 4, wherein the temperature is anywhere between ambient temperature and boiling temperature.

6. A method according to any of claims 1 to 5, applied to ferric leach solutions which comprise dissolved metals such as nickel and/or cobalt and/or zinc and/or copper and/or similar other metals that are normally soluble in relevant acids.

7. A method according to any of claims 1 to 6, wherein the method is used in continuous mode and/or in batch mode.

8. A method according to any of claims 1 to 7, wherein a shock pH increase of the iron bearing solution is achieved with alkalines such as soda ash, magnesium oxide, magnesium hydroxide, magnesium carbonate, caustic and ammonia to prevent gel formation of the iron oxide/hydroxide precipitate thus enabling easy filtration and minimizing loss of any other metallic values, instead of or in addition to the pH raising in accordance with claim 1.

## Patentansprüche

1. Verfahren zum Entfernen von Eisen aus Laugenlösungen, Erhalten durch Auslaugen von metalltragenden Materialien mit Säuren, in der Form von Hydroxid und/oder Oxid durch Ausfällung, wobei der pH-Wert der eisentragenden Laugenlösung auf zwischen 2,8-3,0 angehoben wird durch Zufügen der eisentragenden Lösung, bevorzugt mit pH-Wert von 0,1, zu einer Emulsion aus Kalk und/oder Kalkstein mit einem pH-Wert von über 10, welche Emulsion bevorzugt getrennt hergestellt wird.

2. Verfahren nach Anspruch 1, wobei der pH-Wert der eisentragenden Laugenlösung ≥0,1 ist, bevorzugt im Wesentlichen so niedrig wie 0,1, noch bevorzugter 0,1.

3. Verfahren nach Anspruch 1 oder 2, wobei Eisen und Aluminium, verbleibend in der Lösung, vollständig aus der Lösung ausgefällt wird durch anfängliches Erhöhen des Lösungs-pH-Wertes auf etwa 4,5 mit Kalk und/oder Kalkstein und dann Absenken des pH-Werts auf zwischen 3,25-3,5 mit verdünntem Wasserstoffperoxid und dann Erhöhen des pH-Wertes zurück auf etwa 4,5 mit Kalk und/oder Kalkstein.

4. Verfahren nach einem der Ansprüche 1 bis 3, durchgeführt unter im Wesentlichen atmosphärischem Druck.

5. Verfahren nach einem der Ansprüche 1 bis 4, wobei die Temperatur irgendwo zwischen Umgebungstemperatur und Siedetemperatur ist.

6. Verfahren nach einem der Ansprüche 1 bis 5, angewendet auf Eisen(III) - Laugenlösungen, die aufgelöste Metalle umfassen, wie Nickel und/oder Cobalt und/oder Zink und/oder Kupfer und/oder ähnliche andere Metalle, die normalerweise in relevanten Säuren löslich sind.

7. Verfahren nach einem der Ansprüche der 1 bis 6, wobei das Verfahren in einem kontinuierlichen Modus und/oder in einem Chargenmodus verwendet wird.

8. Verfahren nach einem der Ansprüche 1 bis 7, wobei ein Schock der pH-Erhöhung der eisentragenden Lösung erreicht wird mit Alkalihaltigem, wie Sodaasche, Magnesiumoxid, Magnesiumhydroxid, Magnesiumcarbonat, Natriumhydroxid und Ammoniak, um eine Gelbildung des Eisenoxid/-hydroxid-Niederschlags zu verhindern, dadurch ermöglichend eine leichte Filtration und eine Minimierung eines Verlustes von irgendwelchen anderen metallischen Werten, an Stelle von oder zusätzlich zu der pH-Wert-Erhöhung gemäß Anspruch 1.

## Revendications

1. Procédé d'enlèvement du fer, par précipitation, de solutions de lixiviation, obtenues en lixiviant des matières métallifères avec des acides, sous la forme d'hydroxyde et/ou d'oxyde, le pH de la solution de lixiviation ferrifère étant augmenté jusqu'à entre 2,8 et 3,0 en ajoutant la solution ferrifère, de préférence avec un pH de 0,1, à une émulsion de chaux et/ou de carbonate de calcium avec un pH de plus que 10, laquelle émulsion est préparée de préférence séparément.

2. Procédé selon la revendication 1, dans lequel le pH de la solution de lixiviation ferrifère est ≥ 0,1, de préférence essentiellement aussi bas que 0,1, et idéalement de 0,1.

3. Procédé selon la revendication 1 ou 2, dans lequel le fer et l'aluminium restant dans la solution sont précipités complètement hors de la solution en augmentant initialement le pH de la solution jusqu'à 4,5 avec de la chaux ou du carbonate de calcium, puis abaissant le pH jusqu'à entre 3,25 et 3,5 avec du peroxyde d'hydrogène dilué puis en augmentant à nouveau le pH jusqu'à environ 4,5 avec de la chaux et/ou du carbonate de calcium.

4. Procédé selon l'une quelconque des revendications 1 à 3, exécuté essentiellement à la pression atmosphérique.

5. Procédé selon l'une quelconque des revendications 1 à 4, dans lequel la température est située n'importe où entre la température ambiante et la température d'ébullition.

6. Procédé selon l'une quelconque des revendications 1 à 5, appliqué à des solutions de lixiviation ferriques qui comprennent des métaux dissous tels que du nickel et/ou du cobalt et/ou du zinc et/ou du cuivre et/ou d'autres métaux similaires qui sont normalement solubles dans des acides appropriés.

7. Procédé selon l'une quelconque des revendications 1 à 6, ce procédé étant utilisé dans un mode continu et/ou dans un mode par lots.

8. Procédé selon l'une quelconque des revendications 1 à 7, dans lequel une augmentation du pH choc de la solution ferrifère est obtenue avec des alcalins tels que le carbonate de soude, l'oxyde de magnésium, l'hydroxyde de magnésium, le carbonate de magnésium, le caustique et l'ammoniac pour empêcher la formation de gel du précipité d'oxyde/d'hydroxyde de fer, permettant ainsi une filtration facile et réduisant au minimum la perte de toutes autres valeurs métalliques, au lieu de ou en plus de l'augmentation du pH conformément à la revendication 1.
